# EUROPÄISCHE PATENTSCHRIFT

(11) **EP 2 018 226 B1**
(45) Veröffentlichungstag und Bekanntmachung des Hinweises auf die Patenterteilung: **25.02.2015**
(21) Anmeldenummer: 07724788.0
(22) Anmeldetag: 02.05.2007
(51) Int. Cl.: B05B 11/00, B29C 65/08, B29C 65/42, B29C 65/60, B29C 65/54

(54) **ABGABEVORRICHTUNG**
DISPENSING DEVICE
DISPOSITIF DISTRIBUTEUR

(30) Priorität: 12.05.2006 DE 102006022747; 30.05.2006 DE 102006025482; 30.06.2006 DE 102006030829
(43) Veröffentlichungstag der Anmeldung: 28.01.2009
(73) Patentinhaber: Aptar Dortmund GmbH, 44319 Dortmund (DE)
(72) Erfinder: NEUHAUS, Reinhard, 58675 Hemer (DE); CANFIELD, Reiker, 45239 Essen (DE)
(74) Vertreter: Von Rohr Patentanwälte Partnerschaft mbB
(86) Internationale Anmeldenummer: PCT/EP2007/003862
(87) Internationale Veröffentlichungsnummer: WO 2007/131634

(56) Entgegenhaltungen:
- GB-A- 1 405 546
- US-A- 3 258 369
- US-A- 4 304 749
- US-A- 4 352 443
- US-A- 5 007 596
- US-A- 5 197 637
- US-A- 5 857 224
- US-A1- 2002 037 179
- US-A1- 2002 051 314

## Beschreibung

Die vorliegende Erfindung betrifft eine Abgabevorrichtung sowie ein Verfahren zu dessen Herstellung.

Unter dem Begriff "Abgabevorrichtung" ist bei der vorliegenden Erfindung insbesondere eine Dosierpumpe bzw. handbetätigte Pumpe zur Abgabe einer vorzugsweise kosmetischen Flüssigkeit zu verstehen. Jedoch kann es sich auch um jede sonstige Abgabevorrichtung, wie einen Behälter, Ausgabe- oder Sprühkopf, Spender oder dergleichen, insbesondere für eine kosmetische Flüssigkeit, handeln.

Unter dem Begriff "kosmetische Flüssigkeit" sind in einem engeren Sinn Kosmetika, Haarspray, Haarlack, ein Deodorant, ein Schaum, ein Gel, ein Farbspray, ein Sonnen- oder Hautpflegemittel o. dgl. zu verstehen. Vorzugsweise werden in einem weiteren Sinn aber auch sonstige Körperpflegeprodukte, Reinigungsprodukte, o. dgl., und auch Suspensionen und Fluide, insbesondere mit Gasphasen, umfasst. Weiter können als sonstige Flüssigkeiten, beispielsweise Luftverbesserer, und insbesondere auch technische Flüssigkeiten und Fluide, wie Rostlöser o. dgl., eingesetzt werden. Nachfolgend wird jedoch aus Vereinfachungsgründen und aufgrund des Nutzungsschwerpunkts oft nur von kosmetischer Flüssigkeit gesprochen.

Es sind Abgabevorrichtungen mit einem Unterteil und einem elastischen Oberteil bekannt. Das Oberteil wird mit dem Unterteil vorzugsweise verschweißt, um eine flüssigkeitsdichte Pumpkammer herzustellen. Durch Niederdrücken des Oberteils oder zumindest eines Betätigungsabschnitts des Oberteils ist eine Flüssigkeit aus der Pumpkammer verdrängbar und abgebbar. Anschließend erfolgt ein selbsttätiges elastisches Rückstellen des Oberteils bzw. Betätigungsabschnitts, wobei neue Flüssigkeit in die Pumpkammer gesaugt wird.

Die US 5,197,637 A betrifft eine Pumpe für Fluide mit einem Pumpenelement, das eine elastisch deformierbare Membran aufweist und gegen eine Rückstellkraft gegen ein Stützelement gedrückt werden kann. Ferner weist die Pumpe eine Pumpenkammer zwischen dem Pumpenelement und dem Stützelement auf, die fluidisch mit einem Einlassventil und einer Auslassöffnung verbunden ist, wobei sich die Auslassöffnung durch die Membran erstreckt.

Der vorliegenden Erfindung liegt die Aufgabe zugrunde, eine verbesserte Abgabevorrichtung und ein Verfahren zu deren Herstellung anzugeben, so dass eine flüssigkeitsdichte Verbindung zwischen zwei Bauteilen auf einfache und/oder sichere Weise herstellbar ist.

Die obige Aufgabe wird durch eine Abgabevorrichtung gemäß Anspruch 1 oder durch ein Verfahren gemäß Anspruch 13 gelöst. Vorteilhafte Weiterbildungen sind Gegenstand der Unteransprüche.

Ein Aspekt der vorliegenden Erfindung liegt darin, zwei Bauteile miteinander flüssigkeitsdicht zu verbinden. Das erste Bauteil weist eine Ausnehmung und das zweite Bauteil einen Vorsprung auf oder umgekehrt. Im flüssigkeitsdicht verbundenen Zustand greift ein erster, zur Ausnehmung zumindest im wesentlichen komplementärer Abschnitt in die Ausnehmung ein und ist mit dieser durch temporär verflüssigtes und/oder verformtes Material verbunden, das von einem zweiten Abschnitt des Vorsprungs gebildet und/oder in die Ausnehmung eingespritzt ist. Dies gestattet eine einfache Herstellung einer hochgradig flüssigkeitsdichten Verbindung, wobei eine sehr sichere, insbesondere für die Massenproduktion geeignete Abdichtung erreichbar ist.

Die Verflüssigung des Materials erfolgt insbesondere durch Ultraschall oder auf sonstige geeignete Weise. So kann gemäß einer Ausführungsform der sich vorzugsweise an das freie Ende des ersten Abschnitts anschließende zweite Abschnitt des Vorsprungs beim Zusammenbau verflüssigt werden und den ersten Abschnitt mit der Wandung der Ausnehmung verbinden und/oder dazwischen vorhandene Zwischenräume ausfüllen, so dass die gewünschte flüssigkeitsdichte Verbindung hergestellt wird. In diesem Fall stellt der zweite Abschnitt insbesondere einen zusätzlichen Materialvorrat des Vorsprungs dar, der beim Zusammenbau - insbesondere durch Ultraschallschweißen - verflüssigt wird, um letztendlich die beiden Bauteile miteinander zu verbinden. Besonders bevorzugt und effektiv kann der Ultraschall über die dem Vorsprung abgewandte Flachseite des den Vorsprung tragenden Bauteils - insbesondere über eine dem Vorsprung gegenüberliegende Erhebung - eingeleitet werden.

Gemäß einer anderen Ausführungsform wird das Material zum Verbinden des Vorsprungs mit der Ausnehmung und zum Ausfüllen von Zwischenräumen nicht (allein) durch den zweiten (zusätzlichen) Abschnitt des Vorsprungs gebildet, sondern alternativ oder zusätzlich durch einen Kanal in flüssiger Form in die Ausnehmung und insbesondere durch den Vorsprung hindurch - insbesondere bis zu dessen freiem Ende - eingespritzt.

Gemäß einer weiteren Ausführungsform ist die Ausnehmung als Durchbrechung ausgebildet. In diesem Fall durchgreift der Vorsprung die Durchbrechung, wobei sich der zweite Abschnitt des Vorsprungs über die Durchbrechung hinaus erstreckt und insbesondere thermisch so verformt wird, daß er die Durchbrechung und damit das erste Bauteil hintergreift und formschlüssig hält. Vorzugsweise ist die Ausnehmung bzw. Durchbrechung als Durchgangsbohrung und/oder der Vorsprung bolzenartig bzw. zylindrisch (vor seiner Verformung) ausgebildet.

Weitere Vorteile, Merkmale, Eigenschaften und Aspekte der vorliegenden Erfindung ergeben sich aus den Ansprüchen und der folgenden Beschreibung bevorzugter Ausführungsformen anhand der Zeichnung. Es zeigt:
- Fig. 1: einen schematischen Schnitt einer vorschlagsgemäßen Abgabevorrichtung gemäß einer ersten Ausführungsform;
- Fig. 2: einen vergrößerten Ausschnitt von Fig. 1 von zwei noch nicht miteinander verbundenen Bauteilen;
- Fig. 3: einen vergrößerten Ausschnitt von Fig. 1 mit zwei verbundenen Bauteilen;
- Fig. 4: einen ausschnittsweisen, schematischen Schnitt einer vorschlagsgemäßen Abgabevorrichtung gemäß einer zweiten Ausführungsform;
- Fig. 5: einen ausschnittsweisen, schematischen Schnitt einer vorschlagsgemäßen Abgabevorrichtung gemäß einer dritten Ausführungsform; und
- Fig. 6: einen schematischen Schnitt einer vorschlagsgemäßen Abgabevorrichtung gemäß einer vierten Ausführungsform mit zwei noch nicht miteinander verbundenen Bauteilen.

In den nicht maßstabsgerechten, nur schematischen Figuren werden für gleiche oder ähnliche Teile dieselben Bezugszeichen verwendet, wobei entsprechende oder vergleichbare Eigenschaften und Vorteile erreicht werden, auch wenn eine wiederholte Beschreibung weggelassen ist.

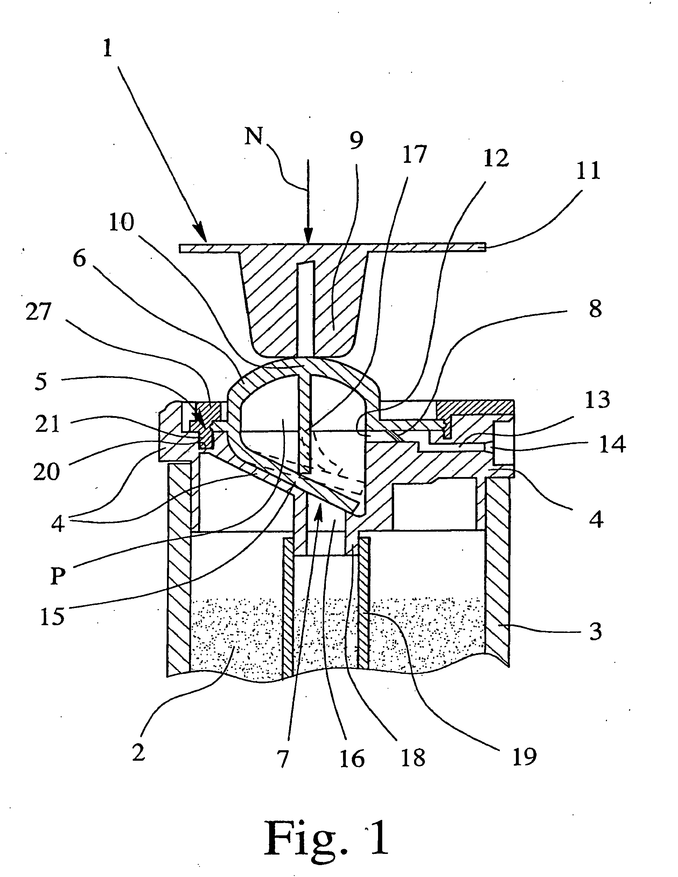

Fig. 1 zeigt eine erste Ausführungsform einer vorschlagsgemäßen Abgabevorrichtung 1 zur Abgabe einer vorzugsweise kosmetischen Flüssigkeit 2 im eingangs genannten Sinn. Die Flüssigkeit 2 kann wesentlich höher viskos sein als Wasser oder ggf. sogar pastös.

Der Abgabevorrichtung 1 ist vorzugsweise ein Beutel oder Behälter 3 zur Versorgung mit der Flüssigkeit 2 zugeordnet, an dem die Abgabevorrichtung 1 bedarfsweise lösbar befestigt ist oder umgekehrt. So kann ggf. ein Austausch des Beutels, Behälters 3 o. dgl. und/oder ein Nachfüllen der Flüssigkeit 2 erfolgen. Alternativ kann die Abgabevorrichtung 1 auch ein Reservoir für die Flüssigkeit 2 oder den Behälter selbst bilden.

Die Abgabevorrichtung 1 weist vorzugsweise ein erstes Bauteil 4, insbesondere ein Unterteil, und ein zweites Bauteil 5 auf. Das zweite Bauteil 5 ist mit dem ersten Bauteil 4 vorzugsweise unlösbar, flüssigkeitsdicht und insbesondere gasdicht verbunden bzw. verbindbar.

Das erste und/oder zweite Bauteil 4, 5 ist vorzugsweise starr und/oder einstückig ausgebildet, insbesondere aus einem geeigneten, vorzugsweise lebensmittelechten Kunststoff, insbesondere einem Polyolefin, wie PP (Polypropylen) oder PE (Polyethylen), gespritzt oder in sonstiger Weise hergestellt.

Das zweite Bauteil 5 dient vorzugsweise einer Befestigung bzw. Halterung eines weiteren Bauteils, insbesondere eines Oberteils bzw. elastisch verformbaren Teils oder Abschnitts 6. Besonders bevorzugt ist der Abschnitt 6 vom zweiten Bauteil 5 gebildet oder an dieses angeformt oder umgekehrt.

Beim Darstellungsbeispiel ist das zweite Bauteil 5 vorzugsweise an den Abschnitt 6 angespritzt oder in sonstiger Weise unlösbar und flüssigkeitsdicht damit verbunden. Dies ermöglicht eine einfache Herstellung, beispielsweise durch sogenannte "Bi-Injection", also insbesondere Anspritzen eines weiteren Materials in der gleichen Spritzform, in der ein erstes Material geformt wird. Insbesondere wird so eine chemische und/oder mechanische Verbindung ermöglicht.

Alternativ oder zusätzlich kann das zweite Bauteil 5 mit dem Abschnitt 6 auch durch eine Hinterschneidung, Ausnehmung, Durchbrechung, Überlappung o. dgl. verbunden oder gehalten sein. Jedoch kann es sich bei dem weiteren Bauteil und dem zweiten Bauteil 5 auch um getrennte Bauteile handeln.

Die Bezeichnungen "Unterteil" und "Oberteil" entsprechen bei der Darstellung gemäß Fig. 1 der bevorzugten Anordnung bzw. Ausrichtung der Abgabevorrichtung 1 bei normaler Benutzung. Dies ist jedoch nicht zwingend der Fall. Dementsprechend können je nach Bedarf, Anwendung, Ausbildung u. dgl. das Unterteil und das Oberteil auch in beliebiger räumlicher Ausrichtung zueinander stehen bzw. ausgerichtet sein.

Der Abschnitt 6 ist vorzugsweise elastisch verformbar. Besonders bevorzugt ist zwischen dem ersten Bauteil 4 und dem weiteren Bauteil bzw. Abschnitt 6 ein Aufnahme- oder Pumpraum P für die Flüssigkeit 2 gebildet oder davon - zumindest teilweise - begrenzt.

Die Abgabevorrichtung 1 ist vorzugsweise als Pumpe mit einem Einlaßventil 7 und einem Auslaßventil 8 ausgebildet.

Vorzugsweise bildet der Abschnitt 6 zusammen mit dem ersten Bauteil 4 das Einlaßventil 7 und/oder Auslaßventil 8. Jedoch können die Ventile 7, 8 auch separat gebildet sein. Die Ventile 7, 8 sind vorzugsweise als selbst schließende Einwegeventile ausgebildet.

Wenn der Pumpraum P mit Flüssigkeit 2 gefüllt ist, kann ausgehend von der in Fig. 1 gezeigten Ruhe- bzw. Ausgangsstellung durch Verformen des Abschnitts 6 das Volumen des Pumpraums P verkleinert und dadurch Flüssigkeit 2 aus dem Pumpraum P verdrängt und ausgegeben werden. Insbesondere wird hierzu ein optionales Betätigungselement 9 vorzugsweise manuell in Richtung des Pfeils N und dadurch zumindest ein Betätigungsabschnitt 10 des Abschnitts 6 niedergedrückt.

Vorzugsweise ist das Betätigungselement 9 einem vorzugsweise kappenförmigen Gehäuseteil 11 zugeordnet oder davon gebildet. Beim Darstellungsbeispiel bildet das Gehäuseteil 11 eine vorzugsweise axial verschiebbare oder verkippbare oder eindrückbare Handhabe zur Betätigung der Abdeckvorrichtung 1 bzw. der davon gebildeten Pumpe.
Jedoch ist es beispielsweise auch möglich, daß ein nicht dargestellter Benutzer oder sonstiger Gegenstand unmittelbar auf den Abschnitt 6 bzw. Betätigungsabschnitt 10 zur Ausgabe von Flüssigkeit 2 drückt.

Beim Niederdrücken bzw. Pumpen wird die Flüssigkeit 2 wird über das Auslaßventil 8 aus- bzw. abgegeben. Das Öffnen des Auslaßventils 8 erfolgt insbesondere selbsttätig, vorzugsweise aufgrund des Flüssigkeitsdrucks, und/oder - ggf. zusätzlich - aufgrund einer entsprechenden Verformung des Abschnitts 6 beim Niederdrücken.

Beim Darstellungsbeispiel ist das Auslaßventil 8 vorzugsweise seitlich neben dem Betätigungsabschnitt 10 bzw. einem vorzugsweise dom- oder halbkugelartigen Bereich des Abschnitts 6 angeordnet.

Das Auslaßventil 8 ist vorzugsweise durch ein beispielsweise lappenartiges Ventilelement gebildet, das insbesondere an das zweite Bauteil 5 bzw. den Abschnitt 6 angeformt oder davon gebildet ist.

Das Auslaßventil 8 ist über einen Anschlußkanal 12 an den Pumpraum P angeschlossen. Das Öffnen des Auslaßventils 8 erfolgt insbesondere selbstständig durch den Flüssigkeitsdruck. Die Flüssigkeit 2 kann dann über einen sich anschließenden Ausgabekanal 13 und/oder eine Düse 14 o. dgl. ausströmen und ausgegeben werden.

Insbesondere wird die Flüssigkeit 2 von der Düse 14 beim Niederdrücken des Betätigungselements 9 bzw. Gehäuseteils 11 ausgegeben bzw. versprüht oder zerstäubt. Alternativ oder wahlweise kann die Ausgabe von Flüssigkeit 2 durch die Abgabevorrichtung 1 auch in nicht zerstäubtem Zustand erfolgen.

Bei entsprechendem Abfall des Flüssigkeitsdrucks in der Pumpkammer P-insbesondere nach Beendigung des Niederdrückens des Betätigungsabschnitts 10 - schließt das Auslaßventil 8 vorzugsweise wieder selbsttätig, insbesondere aufgrund entsprechender Rückstellkräfte.

Aufgrund der Eigenelastizität bzw. der Rückstellkraft des Betätigungsabschnitts 10 bzw. des Abschnitts 6 erfolgt nach dem Loslassen ein vorzugsweise selbsttätiges Rückstellen in die in Fig. 1 gezeigte Ausgangslage, wobei neue Flüssigkeit 2 über das Einlaßventil 7 in den Pumpräum P aufgenommen, insbesondere eingesaugt wird. Das Öffnen des Einlaßventils 7 während des Rückstellens erfolgt vorzugsweise aufgrund des dabei im Pumpraum P herrschenden Unterdrucks.

Das Einlaßventil 7 weist vorzugsweise einen an den Abschnitt 6 bzw. das zweite Bauteil 5 angeformten Ventillappen 15 auf, der gegen eine Einlaßöffnung 16 vorgespannt und insbesondere in dem Pumpraum P angeordnet ist. Besonders bevorzugt ist der beispielsweise blattfederartig ausgebildete Ventillappen 15 durch ein vorzugsweise ebenfalls lappenartiges oder stegartiges Vorspannelement 17 gegen die Einlaßöffnung 16 vorgespannt. Das Vorspannelement 17 ist insbesondere am Abschnitt 6 bzw. Betätigungsabschnitt 10 gebildet bzw. angeformt. Das Vorspannelement 17 unterstützt das Schließen des Ventillappens 15-insbesondere auch bei Flüssigkeit 2 hoher Viskosität - und stellt sicher, daß das Einlaßventil 7 bei normaler Betätigung auch geschlossen bleibt.

Bei der Rückstellung des Abschnitts 6 bzw. Betätigungsabschnitts 10 aus der (nicht dargestellten) niedergedrückten Position in die in Fig. 1 dargestellte Ausgangslage kann Flüssigkeit 2 über einen vorzugsweise vorgesehenen, sich an das Einlaßventil 7 bzw. die Einlaßöffnung 16 anschließenden Anschlußstutzen 18 und insbesondere eine sich daran anschließende, in den Behälter 3 erstreckende Saugleitung 19 aufgenommen bzw. angesaugt werden. Hierbei öffnet dann das Einlaßventil 7 bzw. der Ventillappen 15, wie in Fig. 1 gestrichelt angedeutet. Nach dem An- bzw. Einsaugen von Flüssigkeit 2 in den Pumpraum P schließt das Einlaßventil 7 bzw. dessen Ventillappen 15 vorzugsweise selbsttätig wieder.

Bei der ersten Ausführungsform weist das erste Bauteil 4 eine vorzugsweise nutförmige Ausnehmung 20 und das zweite Bauteil 5 einen vorzugsweise stegartigen, insbesondere zu der Ausnehmung im wesentlichen korrespondierenden Vorsprung 21 auf. Der Vorsprung 21 greift in die Ausnehmung 20 ein, wobei die beiden Bauteile 4, 5 nicht lösbar in diesem Bereich miteinander verbunden bzw. verbindbar sind. Die Verbindung der beiden Bauteile 4, 5 bzw. des Oberteils mit dem Unterteil ist flüssigkeitsdicht und insbesondere auch gasdicht, um den auftretenden Belastungen und Drücken beim Pumpen standhalten zu können und insbesondere ein effektives Pumpen ohne Leckage zu ermöglichten.

Beim Darstellungsbeispiel ist das Bauteil 5 oder der Vorsprung 21 insbesondere ringförmig ausgebildet und insbesondere peripher zumindest abschnittsweise umlaufend angeordnet, vorzugsweise um den Abschnitt 6 bzw. Betätigungsabschnitt 10 herum.

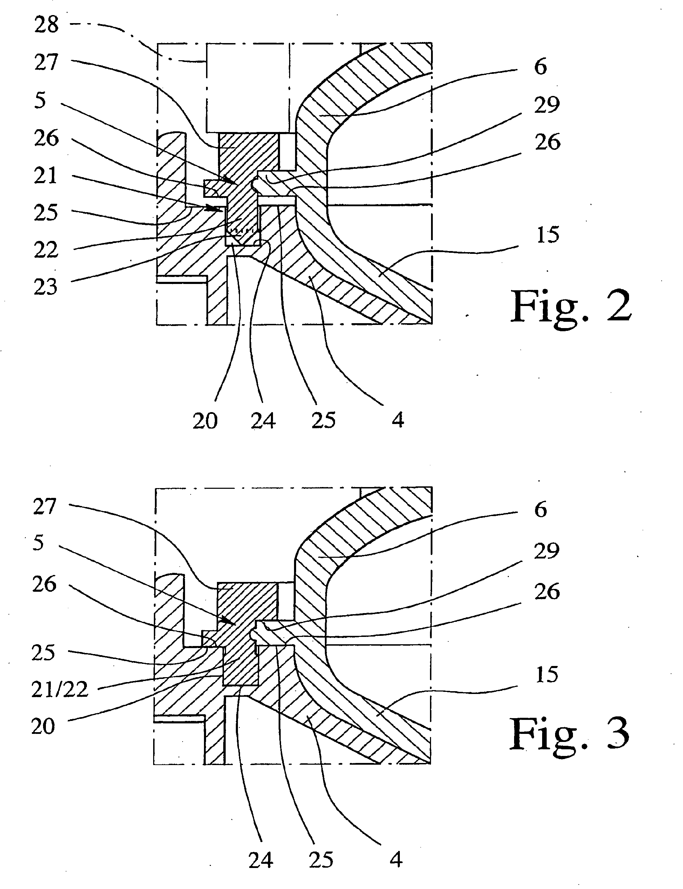

Fig. 2 und 3 veranschaulichen in vergrößerten Ausschnitten von Fig. 1 das bevorzugte Verbinden der beiden Bauteile 4, 5 gemäß der ersten Ausführungsform. Fig. 2 zeigt die beiden Bauteile 4, 5 im noch nicht verbundenen Zustand, jedoch mit bereits in die Ausnehmung 20 eingeführtem Vorsprung 21. Fig. 3 zeigt die beiden Bauteile 4, 5 im verbundenen Zustand.

Der Vorsprung 21 weist einen ersten Abschnitt 22 auf, der zur Ausnehmung 20 zumindest im wesentlichen komplementär und im Darstellungsbeispiel im gezeigten Axialschnitt zumindest im wesentlichen rechteckig ausgebildet ist. Die Ausnehmung 20 ist im Axialschnitt bzw. Querschnitt vorzugsweise ebenfalls zumindest im wesentlichen rechteckig oder leicht verjüngt ausgebildet. Insbesondere ist der erste Abschnitt 22 in seiner radialen Breite bzw. Dicke so angepaßt, daß er in die Ausnehmung 20 insbesondere mit höchstens geringem radialen Spiel, also insbesondere nur kleinen seitlichen Zwischenräumen, axial einführbar ist. Die axiale Erstreckung des ersten Abschnitts 22 entspricht zumindest im wesentlichen der Tiefe der Ausnehmung 20 (Nuttiefe).

Der Vorsprung 21 weist weiter einen zweiten Abschnitt 23 auf, der sich insbesondere an das freie Ende bzw. zum Boden 24 der Ausnehmung 20 hin an den ersten Abschnitt 22 anschließt. Besonders bevorzugt ist der zweite Abschnitt 23 zum Nutboden 24 hin verjüngt, insbesondere im Querschnitt zumindest im wesentlichen trapezförmig oder dreieckig ausgebildet, wie in Fig. 2 angedeutet. Der zweite Abschnitt 23 dient bei der ersten Ausführungsform insbesondere nur zur Bereitstellung von (zusätzlichem) Material zur Verbindung der beiden Bauteile 4, 5. Entsprechend ist der zweite Abschnitt 23 im verbundenen Zustand der Bauteile 4, 5 nicht mehr vorhanden, sondern insbesondere durch Verflüssigung in die vorhandenen Zwischenräume o. dgl. verformt bzw. verbraucht, um die gewünschte Verbindung der Bauteile 4, 5 zu bewirken.

Die Ausnehmung 20 ist vorzugsweise in einem flächigen Abschnitt 25 des ersten Bauteils 4 gebildet. Besonders bevorzugt ist das erste Bauteil 4 senkrecht zum flächigen Abschnitt 25 zur Bildung der Ausnehmung 20 ausgenommen. Der Vorsprung 21 ragt vorzugsweise von einem flächigen Abschnitt 26 des zweiten Bauteils 5 bzw. Oberteils ab, insbesondere zumindest im wesentlichen senkrecht. Im zusammengebauten bzw. verbundenen Zustand kommen die beiden flächigen Abschnitte 25, 26 vorzugsweise aufeinander zu liegen.

Auf der dem Vorsprung 21 abgewandten Seite - insbesondere dem Vorsprung 21 unmittelbar gegenüberliegend - weist das zweite Bauteil 5 vorzugsweise eine Erhebung 27 zur gezielten Einleitung von Ultraschall, insbesondere mittels eines aufsetzbaren Übertragungselements 28, auf, wie in Fig. 2 angedeutet. Die Erhebung 27 ist insbesondere ringförmig und im Querschnitt zumindest im wesentlichen rechteckig ausgebildet, um das insbesondere ringförmige Übertragungselement 28 eines Ultraschallkopfes o. dgl. zum Verschweißen der beiden Bauteile 4, 5 durch Ultraschall aufsetzen zu können.

Die radiale Breite der Erhebung 27 entspricht vorzugsweise höchstens dem fünffachen der radialen Dicke des Vorsprungs 21, um eine gezielte Einleitung des Ultraschalls und Fokussierung im Bereich des Vorsprungs 21 erreichen zu können. Besonders bevorzugt beträgt die radiale Breite der Erhebung 31 zumindest im wesentlichen dem zwei- bis dreifachen der radialen Dicke des Vorsprungs 21, insbesondere zumindest im wesentlichen dem doppelten oder weniger.

Bei der Einleitung von Ultraschall wird dieser durch das zweite, vorzugsweise zumindest im wesentlichen im Bereich der axialen Ultraschalleitung einstückig ausgebildete Bauteil 5 zum freien Ende des Vorsprungs 21, insbesondere zum zweiten Abschnitt 23 übertragen. Die Ultraschallwellen werden durch das verjüngte, insbesondere im wesentlichen spitz oder stumpf zulaufende Ende des zweiten Abschnitts 23 fokussiert und erzeugen in diesem Bereich eine derartige Wärmeeinwirkung, daß das Material des zweiten Abschnitts 23 verflüssigt wird, insbesondere bei optimaler zusätzlicher Druckeinwirkung. Dieses temporär verflüssigte Material verbindet dann den Vorsprung 21 bzw. ersten Abschnitt 22 mit der Wandung der Ausnehmung 20 und/oder füllt Zwischenräume zwischen den Vorsprung 21 und der Wandung der Ausnehmung 20, insbesondere zu den Seitenwänden der Ausnehmung 20 hin, aus, wodurch eine belastbare und flüssigkeitsdichte und insbesondere auch gasdichte Verbindung zwischen den Bauteilen 4 und 5 auf sehr einfache, effektive und schnelle Weise erreicht werden kann. Fig. 3 zeigt die beiden verbundenen Bauteile 4 und 5, wobei der zweite Abschnitt 23 in diesem Zustand aufgrund der Materialverflüssigung umgeformt wurde und nicht mehr in seiner ursprünglichen Form identifizierbar ist.

Beim Darstellungsbeispiel übergreift das zweite Bauteil 5 - insbesondere mit der Erhebung 31 - einen sich radial innenseitig an das zweite Bauteil 5 anschließenden Ringbereich 29 des Abschnitts 6, so daß der Ringbereich 29 und damit auch der Abschnitt 6 vorzugsweise auch formschlüssig axial gehalten werden.

Die Ausnehmung 20 und der Vorsprung 21 erstrecken sich vorzugsweise zumindest im wesentlichen peripher um den Abschnitt 6 bzw. die Pumpkammer P herum beim Darstellungsbeispiel, besonders bevorzugt durchgehend oder bedarfsweise auch unterbrochen bzw. abschnitts- oder sektorweise. Entsprechend kann eine gute und dichte Verbindung über diese periphere bzw. Längserstreckung erreicht werden.

Nachfolgend werden weitere Ausführungsformen anhand der weiteren Figuren erläutert. Hierbei werden insbesondere nur wesentliche Unterschiede oder zusätzliche Aspekte erläutert. Die bisherigen Ausführungen geltend insbesondere ergänzend oder entsprechend.

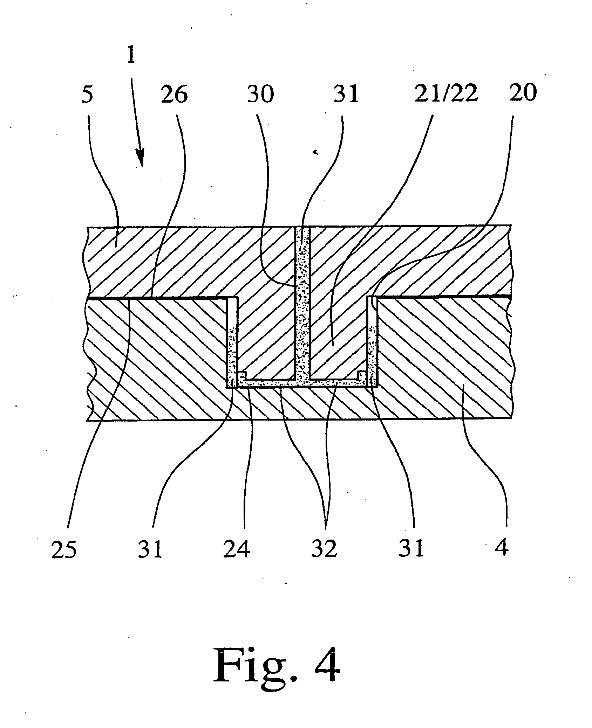

Fig. 4 zeigt in einem schematischen, nicht maßstabsgerechten Schnitt eine zweite Ausführungsform. Fig. 4 zeigt die beiden Bauteile 4 und 5 im bereits verbundenen Zustand. Die zweite Ausführungsform unterscheidet sich von der ersten Ausführungsform darin, daß statt des zweiten Abschnitts 23 mindestens ein Kanal 30 im Vorsprung 21 bzw. durch den ersten Abschnitt 22 gebildet ist. Der Kanal 30 erstreckt sich insbesondere vom freien bzw. axialen Ende des Vorsprungs 21 bis auf die andere Seite des zweiten Bauteils 5. Der Kanal 30 erstreckt sich vorzugsweise zumindest im wesentlichen axial. Jedoch sind auch andere Verläufe möglich.

Durch den Kanal 30 wird das zur Verbindung der beiden Bauteile 4 und 5 vorgesehene Material 31 (je nach Bedarf der gleiche Kunststoff oder ein anderer

Kunststoff wie das erste und/oder zweite Bauteil 4, 5) eingespritzt, insbesondere so daß das Material 31 auch den seitlichen Raum zwischen dem Vorsprung 21 und Seitenwänden der Ausnehmung 20 zumindest teilweise füllt. Zur besseren Verteilung können sich an der Stirnfläche und/oder an den Seitenflächen Verteilungskanäle 32 an den Kanal 30 anschließen, so daß eine sehr gleichmäßige Verteilung des eingespritzten Materials 31 und damit eine sehr gleichmäßige und dichte Verbindung der beiden Bauteile 4, 5 ermöglicht und insbesondere auch sichergestellt werden.

Gemäß einer Ausführungsvariante kann der Kanal 30 auch schlitzförmig ausgebildet sein, zumindest im Bereich seines dem Boden 24 zugewandten Öffnungsendes. So wird eine optimale Verteilung des flüssigen Materials 31 entlang der Längserstreckung des Vorsprungs 21 bzw. der Ausnehmung 20 ermöglicht und vorzugsweise auch sichergestellt.

Das zweite Bauteil 5 bzw. der Vorsprung 21 kann bedarfsweise mit mehreren Kanälen 30 versehen sein. Die Kanäle 30 sind dann vorzugsweise über die Längserstreckung (beim Darstellungsbeispiel senkrecht zur Zeichenebene) der Ausnehmung 20 bzw. des Vorsprungs 21 verteilt.

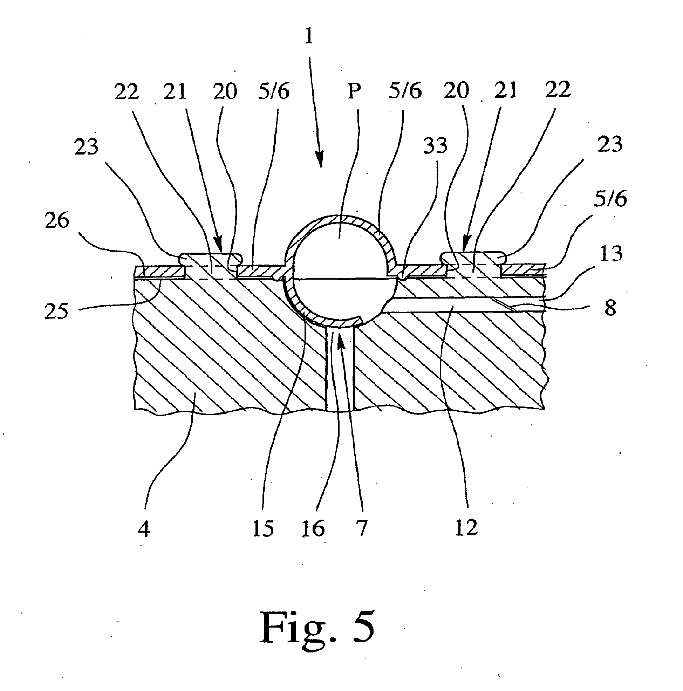

Fig. 5 zeigt eine dritte Ausführungsform in einem schematischen, nicht maßstabsgerechten Schnitt. Es sind vorzugsweise mehrere Vorsprünge 21 vorgesehen. Die Vorsprünge 21 sind hier vorzugsweise am ersten Bauteil 4 gebildet. Sie durchgreifen die vorzugsweise als Durchbrechungen ausgebildeten Ausnehmungen 20 im zweiten Bauteil 5. Über die Durchbrechungen auf der dem ersten Bauteil 4 abgewandten Seite hinausragende zweite Abschnitte 23 der Vorsprünge 21 sind vorzugsweise durch mechanische, thermische und/oder Ultraschalleinwirkung derart verformt, daß diese die jeweilige Durchbrechung bzw. das zweite Bauteil 5 hintergreifen. So wird auf einfache Weise eine sehr feste und auch dichte Verbindung der beiden Bauteile 4 und 5 ermöglicht.

Insbesondere sind eine Vielzahl von vorzugsweise zylindrischen bzw. bolzenartigen Vorsprüngen 21 um die Pumpkammer P bzw. den Abschnitt 6 oder einer Erhebung des zweiten Bauteils 5 herum verteilt und/oder entlang eines Verbindungsbereichs angeordnet, wobei die Vorsprünge 21 diesen zugeordnete, insbesondere hohlzylindrische Durchbrechungen des zweiten Bauteils 5 durchgreifen. Dementsprechend sind die beiden Bauteile 4 und 5 vorzugsweise entlang eines insbesondere länglichen oder linienförmigen Verbindungsbereichs miteinander verbunden.

Gemäß einem anderen, auch separat realisierbaren Aspekt weist das erste und/oder das zweite Bauteil 4 bzw. 5 vorzugsweise um den Pumpraum P herum - insbesondere am flächigen Abschnitt 25 bzw. 26 - einen Dichtungswulst 33 auf, der zum anderen Bauteil 4 bzw. 5 weist, um eine besonders gute Abdichtung zu gewährleisten.

Die jeweilige Anordnung der Ausnehmung 20 an einem Bauteil 4 oder 5 und des Vorsprungs 21 am anderen Bauteil 4 bzw. 5 kann je nach Bedarf auch vertauscht werden.

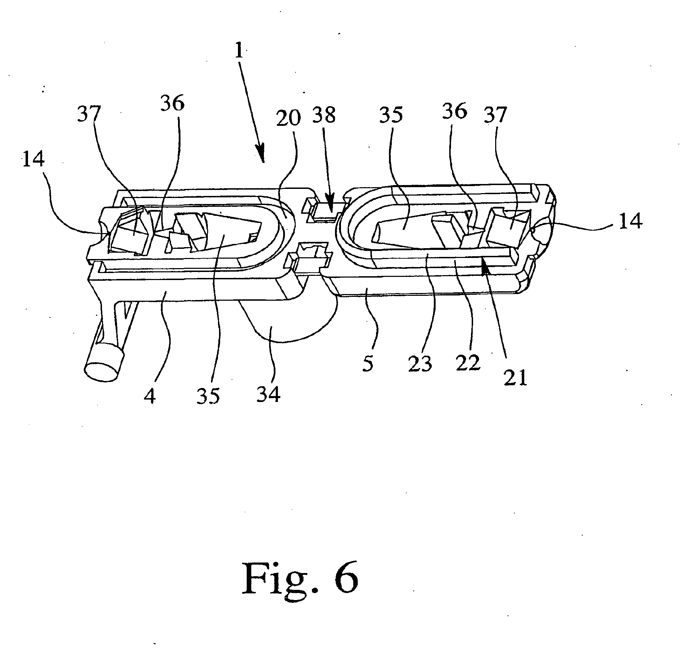

Fig. 6 zeigt in einer schematischen Ansicht eine vierte Ausführungsform der vorschlagsgemäßen Abgabevorrichtung 1, die hier insbesondere als Abgabekopf bzw. Sprühkopf - also nicht als Pumpe, Dispenser o. dgl. wie bei den vorangegangenen Ausführungsformen - ausgebildet ist. Fig. 6 zeigt die Abgabevorrichtung 1 im noch nicht fertig montierten bzw. zusammengebauten Zustand.

Das erste Bauteil 4 ist hier wiederum mit der vorzugsweise nutförmigen Ausnehmung 20 versehen, die sich insbesondere U-förmig erstreckt, wobei am Abgabeende die Düse 14 vorzugsweise zwischen den U-Schenkeln angeordnet ist.

Das zweite Bauteil 5 ist mit dem insbesondere zumindest im wesentlichen komplementär zur Ausnehmung 20 ausgebildeten Vorsprung 21 versehen, der insbesondere den ersten Abschnitt 22 und den sich anschließenden zweiten Abschnitt 23 entsprechend der ersten Ausführungsform aufweist. Die diesbezüglichen Ausführungen und Erläuterungen der ersten Ausführungsform gelten hier ergänzend bzw. entsprechend.

Die Abgabevorrichtung 1 bzw. das erste Bauteil 4 ist vorzugsweise mit einem Anschluß 34 versehen, der insbesondere als zylindrischer Anschlußstutzen o. dgl. ausgebildet ist. Mittels des Anschlusses 34 ist die Abgabevorrichtung an einen nicht dargestellten Behälter 3, wie eine Spraydose, ein nicht dargestelltes Ventil o. dgl. anschließbar, insbesondere auf ein Anschlußelement aufsetzbar bzw. aufsteckbar.

Der Anschluß 34 erstreckt sich insbesondere quer zu der Ausgaberichtung der von der Abgabevorrichtung 1 vorzugsweise gebildeten Düse 14.

Der von der Abgabevorrichtung 1 gebildete Abgabe- bzw. Sprühkopf ist insbesondere bezüglich der Abgaberichtung längs- bzw. in zwei Hälften geteilt, die von den beiden Bauteilen 4 und 5 gebildet sind. Jedoch sind hier auch andere Aufteilungen bzw. konstruktive Lösungen möglich.

Der vorschlagsgemäße Abgabe- bzw. Sprühkopf weist beim Darstellungsbeispiel vorzugsweise eine erste Ausgabekammer 35, die mit dem Anschluß 34 fluidisch in Verbindung steht, eine sich an die erste Ausgabekammer 35 anschließende, optionale Verengung oder Drossel 36 und/oder eine sich daran anschließende zweite Ausgabekammer 37 auf, an die sich die Düse 14 anschließt.

Beim dargestellten, bevorzugten zwei- oder mehrteiligen Aufbau sind die Ausgabekammern 35 und 37 sowie die Verengung 36 und Düse 14 jeweils zweigeteilt in beiden Bauteilen 4 und 5 ausgebildet bzw. werden von diesen gebildet bzw. begrenzt. Jedoch sind hier auch andere konstruktive Lösungen möglich. Insbesondere ist eine zweiteilige Ausbildung der Düse 14 und/oder der Verengung 36 nur optional.

Beim Darstellungsbeispiel kann die nicht dargestellte, auszugebende Flüssigkeit 2 - insbesondere aufgrund eines entsprechenden, darin enthaltenen Treibmittels - in den beiden Ausgabekammern 35 und 37 jeweils bereits etwas entspannen, um dann über die Düse 14 versprüht bzw. zerstäubt zu werden. Jedoch sind hier auch andere konstruktive Lösungen möglich. Insbesondere kann die Flüssigkeit 2 auch in nicht zerstäubter Form, beispielsweise als Flüssigkeitsstrahl, ausgegeben werden.

Es ist anzumerken, daß verschiedene, die Strömung beeinflussende Elemente, wie Vorsprünge, Verengungen, Prallflächen, Stege o. dgl. in dem Strömungsweg - insbesondere in den Ausgabekammern 35 und 37 - von der Abgabevorrichtung 1 bzw. den Bauteilen 4 und 5 gebildet sein können.

Beim Darstellungsbeispiel werden die beiden Bauteile 4 und 5 ausgehend von der in Fig. 6 gezeigten Position derart zusammengeklappt, daß der Vorsprung 21 in die Ausnehmung 20 eingreift. Beim Darstellungsbeispiel sind die vorzugsweise durch Spritzgießen hergestellten Bauteile 4 und 5 nämlich vorzugsweise über eine optionale Verbindung 38, wie einen Steg oder ein Filmscharnier o. dgl., miteinander verbunden. Dies gestattet eine sehr einfache und kostengünstige, einstückige Herstellung. Insbesondere wird die spätere Montage stark vereinfacht, da die Bauteile 4 und 5 nicht erst paarweise aneinander zugeordnet werden müssen. Jedoch können die Bauteile 4 und 5 auch getrennt hergestellt werden.

Wenn der Vorsprung 21 in die Ausnehmung 20 eingreift bzw. hineingedrückt wird, erfolgt bei der Montage dann vorzugsweise ein Verschweißen der Bauteile 4 und 5. Dies erfolgt insbesondere wieder wie bei der ersten Ausführungsform dadurch, daß ein nicht dargestelltes Ultraschallwerkzeug o. dgl. insbesondere auf das zweite Bauteil 5 aufgesetzt und unter der Ultraschalleinwirkung der zweite Abschnitt 23 des Vorsprungs 21 aufgeschmolzen wird, um den Vorsprung 21 bzw. ersten Abschnitt 22 fest und flüssigkeitsdicht und insbesondere gasdicht mit der Wandung der Ausnehmung 20 zu verbinden bzw. zu verschweißen oder zwischen vorhandene Zwischenräume zumindest abzudichten.

So wird auf einfache Weise eine dichte Verbindung der beiden Bauteile 4 und 5 - insbesondere auch bei erheblichen Fertigungstoleranzen - ermöglicht. Außerdem wird eine optimale Gestaltung und einfache Herstellung des Innenraums und/oder der Düse 14 der Abgabevorrichtung 1 ermöglicht.

Einzelne Merkmale und Aspekte der verschiedenen Ausführungsformen können oft beliebig miteinander kombiniert oder bei sonstigen Abgabevorrichtungen o. dgl. eingesetzt werden.

Insbesondere betrifft die vorliegende Erfindung generell die flüssigkeitsdichte Verbindung von zwei Pumpenteilen o. dgl.

### Bezugszeichenliste:

| | | | |
|---|---|---|---|
| 1 | Abgabevorrichtung | 27 | Erhebung |
| 2 | Flüssigkeit | 28 | Übertragungselement |
| 3 | Behälter | 29 | Ringbereich |
| 4 | erstes Bauteil | 30 | Kanal |
| 5 | zweites Bauteil | 31 | Material |
| 6 | Abschnitt | 32 | Ventilkanäle |
| 7 | Einlaßventil | 33 | Dichtungswulst |
| 8 | Auslaßventil | 34 | Anschluß |
| 9 | Betätigungselement | 35 | erste Ausgabekammer |
| 10 | Betätigungsabschnitt | 36 | Verengung |
| 11 | Gehäuseteil | 37 | zweite Abgabekammer |
| 12 | Anschlußkanal | 38 | Verbindung |
| 13 | Ausgabekanal | | |
| 14 | Düse | | |
| 15 | Ventillappen | | |
| 16 | Einlaßöffnung | N | Niederdrückrichtung |
| 17 | Vorspannelement | P | Pumpraum |
| 18 | Anschlußstutzen | | |
| 19 | Saugleitung | | |
| 20 | Ausnehmung | | |
| 21 | Vorsprung | | |
| 22 | erster Abschnitt | | |
| 23 | zweiter Abschnitt | | |
| 24 | Boden | | |
| 25 | flächiger Abschnitt | | |
| 26 | flächiger Abschnitt | | |

## Patentansprüche

1. Abgabevorrichtung (1) für eine kosmetische Flüssigkeit (2), mit einem ersten Bauteil (4) und einem zweiten Bauteil (5), die miteinander flüssigkeitsdicht und nicht lösbar verbunden bzw. verbindbar sind, wobei das erste Bauteil (4) eine nutförmige Ausnehmung (20) und das zweite Bauteil (5) einen Vorsprung (21) mit einem ersten, zur Ausnehmung (20) komplementären stegartigen Abschnitt (22) aufweist, der im verbundenen Zustand in die Ausnehmung (20) eingreift und mit deren Wandung durch temporär verflüssigtes Material (31) verbunden ist, das in die Ausnehmung (20) eingespritzt ist.

2. Abgabevorrichtung nach Anspruch 1, **dadurch gekennzeichnet, dass** die Ausnehmung (20) am vom zweiten Bauteil (5) abgewandten Ende geschlossen ist, insbesondere wobei das Material (31) im Bereich des geschlossenen Endes den Vorsprung (21) mit der Ausnehmungswandung verbindet und/oder Zwischenräume zwischen dem Vorsprung (21) und der Ausnehmungswandung ausfüllt.

3. Abgabevorrichtung nach einem der voranstehenden Ansprüche, **dadurch gekennzeichnet, dass** der erste Abschnitt (22) im Querschnitt zumindest im Wesentlichen rechteckig und/oder die Ausnehmung (20) im Querschnitt zumindest im Wesentlichen rechteckig ausgebildet ist.

4. Abgabevorrichtung nach einem der voranstehenden Ansprüche, **dadurch gekennzeichnet, dass** der erste Abschnitt (22) mindestens einen sich vom freien Ende bis vorzugsweise auf die andere Seite des zweiten Bauteils erstreckenden Kanal (30) aufweist, durch den das Material (31) eingespritzt wird oder ist, insbesondere so dass das Material (31) den seitlichen Raum zwischen dem Vorsprung (21) und der Ausnehmungswandung zumindest teilweise füllt.

5. Abgabevorrichtung nach Anspruch 4, **dadurch gekennzeichnet, dass** der Kanal (30) als Schlitz, insbesondere Längsschlitz, ausgebildet ist, und/oder dass der Vorsprung (21) mit mehreren Kanälen (30) versehen ist.

6. Abgabevorrichtung nach einem der voranstehenden Ansprüche, **dadurch gekennzeichnet, dass** das zweite Bauteil (5) auf der dem Vorsprung (21) abgewandten Seite eine Erhebung (27) zur gezielten Einleitung von Ultraschall mittels eines aufsetzbaren Übertragungselements (28) aufweist.

7. Abgabevorrichtung nach einem der voranstehenden Ansprüche, **dadurch gekennzeichnet, dass** die Ausnehmung (20) in einem flächigen Abschnitt (25) des ersten Bauteils (4) gebildet ist.

8. Abgabevorrichtung nach einem der voranstehenden Ansprüche, **dadurch gekennzeichnet, dass** der Vorsprung (21) von einem flächigen Abschnitt (26) des zweiten Bauteils (5) abragt.

9. Abgabevorrichtung nach den Ansprüchen 7 und 8, **dadurch gekennzeichnet, dass** die beiden flächigen Abschnitte (25, 26) bei verbundenen Bauteilen (4, 5) aufeinander liegen.

10. Abgabevorrichtung nach einem der voranstehenden Ansprüche, **dadurch gekennzeichnet, dass** das erste und/oder zweite Bauteil (4, 5) aus einem Polyolefin, insbesondere Polypropylen oder Polyethylen, besonders bevorzugt LLPE, TPEE oder TEEE, hergestellt ist.

11. Abgabevorrichtung nach einem der voranstehenden Ansprüche, **dadurch gekennzeichnet, dass** das erste und insbesondere zweite Bauteil (5) einen insbesondere elastisch, vorzugsweise manuell, deformierbaren Pumpraum (P) der Abgabevorrichtung (1) begrenzen oder bilden.

12. Abgabevorrichtung nach einem der voranstehenden Ansprüche, **dadurch gekennzeichnet, dass** die Abgabevorrichtung (1) als Dispenser, Pumpe oder Zerstäuber ausgebildet und/oder manuell betätigbar ist oder daß die Abgabevorrichtung (1) als vorzugsweise aufgesteckter Abgabe- oder Sprühkopf ausgebildet ist.

13. Verfahren zur Herstellung einer nach einem der voranstehenden Ansprüche ausgebildeten Abgabevorrichtung (1) für eine kosmetische Flüssigkeit (2) mit zwei flüssigkeitsdicht verbundenen Bauteilen (4, 5), wobei das erste Bauteil (4) eine nutförmige Ausnehmung (20) und das zweite Bauteil (5) einen Vorsprung (21) mit einem ersten, zur nutförmigen Ausnehmung (20) komplementären stegartigen Abschnitt (22) aufweist, wobei der Vorsprung (21) des zweiten Bauteils (5) in die nutförmige Ausnehmung (20) des ersten Bauteils (4) eingeführt wird und wobei flüssiges Material (31) in die nutförmige Ausnehmung (20) eingespritzt wird, um die beiden Bauteile (4, 5) miteinander zu verbinden.

## Claims

1. Dispensing device (1) for a cosmetic liquid (2), with a first component (4) and a second component (5), which are connected or connectable with each other in a liquid-tight and non-detachable manner, wherein the first component (4) comprises a groove-shaped recess (20) and the second component (5) comprises a projection (21) with a first web-like section (22) complementary to the recess (20), which section in the connected state engages in the recess (20) and is connected with its wall by means of a temporarily liquefied material (31), which is injected into the recess (20).

2. Dispensing device according to claim 1, **characterized in that** the recess (20) is closed on the end turned away from the second component (5), in particular, wherein the material (31) in the area of the closed end connects the projection (21) with the recess wall and/or fills in intermediate spaces between the projection (21) and the recess wall.

3. Dispensing device according to one of the preceding claims, **characterized in that** the first section (22) is designed in cross section at least essentially rectangularly and/or the recess (20) in cross section at least essentially rectangularly.

4. Dispensing device according to one of the preceding claims, **characterized in that** the first section (22) has at least one channel (30) extending from the free end preferably up to the other side of the second component, through which the material (31) is injected or is, in particular so that the material (31) at least partially fills the lateral space between the projection (21) and the recess wall.

5. Dispensing device according to claim 4, **characterized in that** the channel (30) is designed as a slot, in particular a longitudinal slot, and/or that the projection (21) is provided with several channels (30).

6. Dispensing device according to one of the preceding claims, **characterized in that** the second component (5) has an elevation (27) on the side turned away from the projection (21) for the targeted introduction of ultrasound by means of an attachable transmission element (28).

7. Dispensing device according to one of the preceding claims, **characterized in that** the recess (20) is formed in a flat section (25) of the first component (4).

8. Dispensing device according to one of the preceding claims, **characterized in that** the projection (21) protrudes from a flat section (26) of the second component (5).

9. Dispensing device according to claims 7 and 8, **characterized in that** both of the flat sections (25, 26) in case of connected components (4, 5) lie on top of each other.

10. Dispensing device according to one of the preceding claims, **characterized in that** the first and/or second component (4, 5) are manufactured from a polyolefin, in particular polypropylene or polyethylene, especially preferably LLPE, TPEE or TEEE.

11. Dispensing device according to one of the preceding claims **characterized in that** the first and in particular second component (5) limit or form in particular an elastic, preferably manually deformable pump space (P) of the dispensing device (1).

12. Dispensing device according to one of the preceding claims, **characterized in that** the dispensing device (1) is designed as a dispenser, pump or atomizer and/or can be activated manually or that the dispensing device (1) is designed as a preferably put on dispensing or spray head.

13. Method for the manufacture of a dispensing device (1) designed according to one of the preceding claims for a cosmetic liquid (2) with two components (4, 5) connected in a liquid-tight manner, wherein the first component (4) comprises a groove-shaped recess (20) and the second component (5) comprises a projection (21) with a first web-like section (22) complementary to the groove-shaped recess (20), wherein the projection (21) of the second component (5) is introduced into the groove-shaped recess (20) of the first component (4) and wherein liquid material (31) is injected into the groove-shaped recess (20), in order to connect the two components (4, 5) with each other.

## Revendications

1. Dispositif de distribution (1) pour un liquide cosmétique (2), avec un premier composant (4) et un deuxième composant (5), reliés ou pouvant être reliés entre eux de manière étanche aux liquides et de manière non amovible, le premier composant (4) comprenant un évidement (20) en forme de rainure et le deuxième composant (5) comprenant une saillie (21) avec une première portion (22) en forme de nervure complémentaire par rapport à l'évidement (20) et qui, dans l'état relié, s'emboîte dans l'évidement (20) et est reliée avec sa paroi par un matériau (31) temporairement liquéfié, qui est injecté dans l'évidement (20).

2. Dispositif de distribution selon la revendication 1, **caractérisé en ce que** l'évidement (20) est fermé au niveau de l'extrémité opposée au deuxième composant (5), plus particulièrement le matériau (31) reliant, au niveau de l'extrémité fermée, la saillie (21) avec la paroi de l'évidement et/ou remplissant des espaces intermédiaires entre la saillie (21) et la paroi de l'évidement.

3. Dispositif de distribution selon l'une des revendications précédentes, **caractérisé en ce que** la première portion (22) présente une section transversale au moins globalement rectangulaire et/ou l'évidement (20) présente une section transversale au moins globalement rectangulaire.

4. Dispositif de distribution selon l'une des revendications précédentes, **caractérisé en ce que** la première portion (22) présente au moins un canal (30) s'étendant de l'extrémité libre jusqu'à, de préférence, l'autre côté du deuxième composant, à travers lequel le matériau (31) est injecté, plus particulièrement de façon à ce que le matériau (31) remplisse au moins partiellement l'espace latéral entre la saillie (21) et la paroi de l'évidement.

5. Dispositif de distribution selon la revendication 4, **caractérisé en ce que** le canal (30) présente la forme d'une fente, plus particulièrement d'une fente longitudinale et/ou en ce que la saillie (21) présente plusieurs canaux (30).

6. Dispositif de distribution selon l'une des revendications précédentes, **caractérisé en ce que** le deuxième composant (5) présente, sur le côté opposé à la saillie (21), une proéminence (27) pour l'émission ciblée d'ultrasons à l'aide d'un élément de transmission (28) pouvant être monté ultérieurement.

7. Dispositif de distribution selon l'une des revendications précédentes, **caractérisé en ce que** l'évidement (20) est formé dans une portion plane (25) du premier composant (4).

8. Dispositif de distribution selon l'une des revendications précédentes, **caractérisé en ce que** la saillie (21) dépasse d'une portion plane (26) du deuxième composant (5).

9. Dispositif de distribution selon les revendications 7 et 8, **caractérisé en ce que** les deux portions planes (25, 26) sont superposées lorsque les composants (4, 5) sont reliés.

10. Dispositif de distribution selon l'une des revendications précédentes, **caractérisé en ce que** le premier et/ou le deuxième composant (4, 5) est constitué d'une polyoléfine, plus particulièrement de polypropylène ou de polyéthylène, de préférence du LLPE, du TPEE ou du TEEE.

11. Dispositif de distribution selon l'une des revendications précédentes, **caractérisé en ce que** le premier et plus particulièrement le deuxième composant (5) délimitent ou forment un espace de pompage (P) du dispositif de distribution (1), déformable de manière élastique, de préférence manuelle.

12. Dispositif de distribution selon l'une des revendications précédentes, **caractérisé en ce que** le dispositif de distribution (1) est conçu comme un distributeur, une pompe ou un pulvérisateur et/ou est actionnable manuellement ou **en ce que** le dispositif de distribution (1) est conçu comme une tête de distribution ou de pulvérisation de préférence enfichable.

13. Procédé de fabrication d'un dispositif de distribution (1) conçu selon l'une des revendications précédentes, pour un liquide cosmétique (2) avec deux composants (4, 5) étanches aux liquides, le premier composant (4) comprenant un évidement (20) en forme de rainure et le deuxième composant (5) comprenant une saillie (21) avec une première portion (22) en forme de nervure complémentaire par rapport à l'évidement (20) en forme de rainure, la saillie (21) du deuxième composant (5) étant inséré dans l'évidement (20) en forme de rainure du premier composant (4) et un matériau liquide (31) étant injecté dans l'évidement (20) en forme de rainure, pour relier entre eux les deux composants (4, 5).
